# EUROPEAN PATENT APPLICATION

(11) **EP 3 499 791 A1**
(43) Date of publication of application: **19.06.2019**
(21) Application number: 17901375.0
(22) Date of filing: 12.04.2017
(51) Int. Cl.: H04L 9/08

(54) **FILE ENCRYPTION AND DECRYPTION METHOD AND APPARATUS**

(30) Priority: 20.03.2017 CN 201710180076
(71) Applicant: Wangsu Science & Technology Co., Ltd., Shanghai 200030 (CN)
(72) Inventor: CHEN, Famin, Shanghai 200030 (CN)
(74) Representative: Hanna Moore + Curley
(86) International application number: PCT/CN2017/080198
(87) International publication number: WO 2018/170963

(57) **Abstract**

The present disclosure provides a file encryption method. The method includes generating an initial key, retrieving data for encryption in a file, obtaining a length of already encrypted data, calculating an encryption key based on the initial key and the length of the already encrypted data, and using the encryption key to encrypt the data for encryption to obtain encrypted data. Compared to the existing encryption methods, through encrypting each byte of the data in the file, the present disclosure substantially increases the key cracking difficulty and improves the data security.

## Description

### CROSS-REFERENCES TO RELATED APPLICATIONS

This application claims the priority of PCT/CN2017/080198, filed on April 12, 2017, the entire contents of which are incorporated herein by reference.

### FIELD OF THE DISCLOSURE

The present disclosure generally relates to the data security technology and, more particularly, relates to a file encryption and decryption method, and a device thereof.

### BACKGROUND

Data encryption, also known as cryptography, refers to the conversion of plaintext to ciphertext through an encryption algorithm and an encryption key, and data decryption refers to the recovery of plaintext from ciphertext through a decryption algorithm and a decryption key. Currently, data encryption is still one of the most reliable methods to protect information in computer systems. Data encryption utilizes cryptographic technology to encrypt and conceal information to protect information security. There are two types of encryption: private key encryption and public key encryption.

With the continuous development of computer Internet technology, the requirements for network data security are getting more and more strigent. The data security methods must be not only substantially crack-resistant, but also adaptive to various types of data files. Conventional data security methods are unable to meet the current needs.

### BRIEF SUMMARY OF THE DISCLOSURE

To solve the problems raised in the background section, the present disclosure provides a file encryption method, a encrypted file decryption method, a file encryption device, and a encrypted file decryption device. The technical solutions are described below.

One aspect of the present disclosure provides a file encryption method including generating an initial key, retrieving data for encryption in a file, obtaining a length of already encrypted data, calculating an encryption key based on the initial key and the length of the already encrypted data, and using the encryption key to encrypt the data for encryption to obtain encrypted data.

Further, the encryption key is calculated by plugging the initial key, the length of the initial key, and the length of the already encrypted data into a pre-determined function.

Further, the encryption key calculated by the pre-determined function is divergent.

Further, the pre-determined function is a hash function.

Further, the encryption key has a same length as the initial key.

Further, a step for generating the initial key includes generating the initial key through a random function.

Further, the initial key is an array.

Further, when the encryption key is used to encrypt the data for encryption, each byte of the data for encryption is encrypted individually.

Further, the encrypted data is obtained by performing a logic XOR operation between the encryption key and the data for encryption.

Further, the file is a streaming media file.

Further, when being retrieved, the data for encryption in the file is retrieved sequentially in sections.

Further, the file encryption method includes storing the initial key.

Another aspect of the present disclosure provides an encrypted file decryption method including acquiring an initial key, retrieving data for decryption from an encrypted file, obtaining a length of already decrypted data and calculating a decryption key based on the initial key and the length of the already decrypted data, and using the decryption key to decrypt the data for decryption to obtain decrypted data.

Further, the decryption key is calculated by plugging the initial key, the length of the initial key, and the length of the already decrypted data into a pre-determined function.

Further, the pre-determined function for decryption is the same as the pre-determined function for encryption.

Further, the initial key for decryption is the same as the initial key for encryption.

Further, when the decryption key is used to decrypt the data for decryption, each byte of the data for decryption is decrypted individually.

Further, the decrypted data is obtained by performing a logic XOR operation between the decryption key and the data for decryption.

Further, the encrypted file is a streaming media file.

Further, a method for retrieving the data for decryption is the same as the method for retrieving the data for encryption when the file is encrypted.

Corresponding to the file encryption method, another aspect of the present disclosure provides a file encryption device, comprising an initial key generation unit configured to generate an initial key and store the initial key into a storage unit, an encryption data retrieval unit configured to retrieve data for encryption in a file, an encryption key generation unit configured to obtain a length of already encrypted data in the file and calculate an encryption key based on the initial key and the length of the already encrypted data, and a data encryption unit configured to use the encryption key to encrypt the data for encryption to obtain encrypted data and store the encrypted data into the storage unit.

Further, the encryption key is calculated by plugging the initial key, the length of the initial key, and the length of the already encrypted data into a pre-determined function.

Further, the encryption key calculated by the pre-determined function is divergent.

Further, the pre-determined function is a hash function.

Further, the encryption key has a same length as the initial key.

Further, the initial key generation unit uses a random function to generate the initial key.

Further, when the data encryption unit uses the encryption key to encrypt the data for encryption, each byte of the data for encryption is encrypted individually.

Further, the data encryption unit obtains the encrypted data by performing a logic XOR operation between the encryption key and the data for encryption.

Further, the file is a streaming media file.

Further, when the encryption data retrieval unit retrieves the data for encryption, the data for encryption in the file is retrieved sequentially in sections.

Corresponding to the encrypted file decryption method, another aspect of the present disclosure provides an encrypted file decryption device, comprising a decryption key generation unit configured to obtain an initial key from a storage unit, obtain a length of already decrypted data in a file, and calculate a decryption key base on the initial key and the length of the already decrypted data, a decryption data retrieval unit configured to retrieve data for decryption from an encrypted file, and a data decryption unit configured to use the decryption key to decrypt the data for decryption to obtain decrypted data and store the decrypted data into the storage unit.

Further, the decryption key generation unit calculates the decryption key by plugging the initial key, the length of the initial key, and the length of the already decrypted data into a pre-determined function.

Further, the pre-determined function for decryption is the same as the pre-determined function for encryption.

Further, the initial key for decryption is the same as the initial key for encryption.

Further, when the data decryption unit uses the decryption key to decrypt the data for decryption, each byte of the data for decryption is decrypted individually.

Further, the data decryption unit obtains the decrypted data by performing a logic XOR operation between the decryption key and the data for decryption.

Further, the encrypted file is a streaming media file.

Further, a method for retrieving the data for decryption is the same as the method for retrieving the data for encryption when the file is encrypted.

The encryption technique provided by the present disclosure introduces random function, pre-determined function, and data retrieval method in the generation of the encryption key, which substantially increases malicious key cracking difficulty. The encryption technique provided by the present disclosure individually encrypts each byte of the data in the file, adapts to various types of files, especially streaming media files, substantially improves the existing data encryption technique, and more effectively satisfies the needs of the current technology advancement.

### BRIEF DESCRIPTION OF THE DRAWINGS

For more clearly illustrating the technical solution according to the present disclosure, the drawings intended to be used in the description of the disclosed embodiments are briefly described in the following. Obviously, the drawings described in the following are merely examples for illustrative purposes according to the disclosed embodiments. Other drawings may be obtained based on these drawings by a person having ordinary skill in the art without departing from the scope of the invention.
FIG. 1 is a flow chart of an exemplary file encryption method according to the disclosed embodiments;
FIG. 2 is a flow chart of an exemplary encrypted file decryption method according to the disclosed embodiments;
FIG. 3 is a block diagram of an exemplary file encryption device according to the disclosed embodiments; and
FIG. 4 is a block diagram of an exemplary encrypted file decryption device according to the disclosed embodiments.

### DETAILED DESCRIPTION

To illustrate the objectives, technical solutions, and features and advantages of the present disclosure more clearly, the exemplary embodiments of the present disclosure will be described in detail with the accompanying drawings.

### The first embodiment

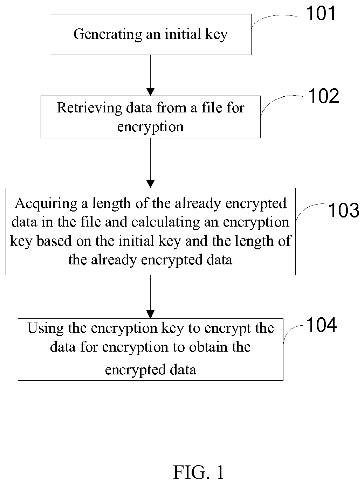

Referring to FIG. 1, the first embodiment of the present disclosure provides an exemplary file encryption method, comprising step 101 through step 104, as described in detail in the following.

Step 101: generating an initial key.

The initial key may be used to generate an encryption key. In one embodiment, the initial key may be a single digit or an array, random or fixed. In certain embodiments, for improved security, the initial key may be generated by a random function. Further, to make it difficult to crack the key, the initial key may be a randomly generated array including a plurality of elements.

Further, for the subsequent decryption operation, the initial key needs to be stored.

Step 102: retrieving data from a file for encryption.

In one embodiment, when the data for encryption is retrieved from the file, the data may be retrieved all at one time or sequentially in sections. The sequential retrieval in sections refers to sequentially retrieving a section of the data having a pre-determined fixed length such that a plurality of retrievals may be required when the sectional retrieval method is used to retrieve the data for encryption. Each time a section of data is retrieved, the data section may be encrypted. Then, the next data section may be retrieved until the data encryption is completed.

Step 103: acquiring a length of the already encrypted data in the file and calculating an encryption key based on the initial key and the length of the already encrypted data.

The length of the already encrypted data in the file refers to a length of the data in the file that has already been encrypted at the moment.

When the encryption key is calculated, the initial key, the length of the initial key, and the length of the already encrypted data may be plugged into a pre-determined function to obtain the encryption key. The present disclosure does not limit the type of the pre-determined function. In certain embodiments, the pre-determined function may be a hash function. Because the result calculated by a hash function is not predictable, the encryption key calculated by the pre-determined function is divergent and does not follow any fixed rules, thus making the key more difficult to crack.

In certain embodiments, to increase the cracking difficulty, the initial key may be configured to be a randomly generated array including a plurality of elements such that the encryption key array calculated by the pre-determined function may have a same length as the initial key array. As a result, the longer the initial key, the larger the data range of the initial key, and thus, the larger the data range of the calculated encryption key array. Each byte in the encryption key array may be the encryption key to encrypt each byte in the file. The encryption keys in the encryption key array may belong to a large data range and be divergent from each other. No encryption key calculated in this way may have any fixed relationship with any other encryption keys, which, to a large extent, makes the encryption keys more difficult to crack and improves the data security.

Step 104: using the encryption key to encrypt the data for encryption to obtain the encrypted data.

When an encryption key is used to encrypt the data in the file for encryption, the logic XOR operation may be performed between the encryption key and the corresponding byte of the data to obtain the encrypted byte of the data.

In one embodiment, when the file is being encrypted, the encryption operation is performed in unit of bytes in the data retrieval order of the file. That is, each byte of the data in the file may have a corresponding encryption key, and the logic operation may be performed between each byte of the data and the corresponding encryption key to obtain the encrypted byte of the data. Thus, in the file encryption process, the file may be encrypted in unit of bytes in the data retrieval order of the file.

The calculation method of the encryption keys and the data encryption method are described in detail with specific programming logic implementation.
Step one: retrieving a section of data *data* in the length of *data_len* from a file *in* for encryption, and recording the length *offset* of the data that have already been encrypted at the moment, where the length of the file *in* is *in_len.* When the length of the retrieved data has a length of 0, the end of the file may be reached, and the encryption process may be exited. The file *in* for encryption and the encrypted file *out* for may be closed. The file *in* for encryption may be deleted. The encrypted file *out* may be renamed as the file *in.* In one embodiment, the completion of the file encryption process may be determined by the length of the data retrieved for encryption. In certain other embodiments, other mechanisms may be used to determine the completion of the file encryption process. For example, the completion may be determined by comparing the length of the already encrypted data and the length of the file for encryption, which is not limited by the present disclosure.
Step two: calculating an offset of the current encryption key array, which is *n* = *offset*/*m*, and an index of the encryption key, which is *key_i* = *offset%m.* The offset of the current encryption key array refers to the sequence number of the encryption key array for the current encryption operation. The index of the encryption key refers to the index of the encryption key for the current encryption operation in the encryption key array. The data offset *data_i* is initialized to 0. The encryption key array new Kn is calculated through a pre-determined function: *new_Kn* = *xor_key*(*key, offset*/*m*), where *key* is the initial key generated by a random function, *m* is the length of the initial key, and *xor_key* is the pre-determined function. To ensure the result calculated by *xor_key* function is divergent, the pre-determined function may be a crc64 (cyclic redundant checksum) function or a hash function. In one embodiment, the pre-determined function may be a crc64 function.
Step three: performing the encryption operation on the byte *data*[*data_i*] of the data *data* and the encryption key *new_Kn*[*key_i*] in the encryption key array *new_Kn.* The calculation procedure may include *data*[*data*_*i*] ^ *new_Kn*[*key_i*], and then self increment of *data_i* and *key_i,* i.e., *data_i*++ and *key_i*++*.*
Step four: when *data_i* == *data_len*, the encryption process of the data *data* in the current retrieval has been completed. The encrypted data corresponding to the data *data* may be written into the file *out.* When *offset* += *in_len,* repeat step one.
Step five: when *key_i* == *m,* recalculating *new_Kn.* The calculation procedure may include *ew_Kn* = *xor_key*(*key*, (*offset* + *data_i*)/*m*), and *n* = (*offset* + *data_i*)/*m.* Set *key_i* = 0, and repeat step three.

Further, the file encryption method according to the present disclosure may include providing an initial key, calculating the encryption key based on the length of the already encrypted data, and using the encryption key to encrypt the file. In the encryption process, each byte of the data in the file may have a corresponding encryption key. Thus, in the decryption process, the initial key, the calculation rules, and the calculation method for the length of the already encrypted data may be required to obtain the correct decryption key.

Further, the encryption method according to the present disclosure may generate the initial key through a random function, and may plug the initial key, the length of the initial key, and the length of the already encrypted data into a hash function to obtain the encryption key such that the encryption key may not be predictable, and the encrypted data may follow any fixed rules. Compared to the existing encryption methods, the present disclosure may make the encryption key more difficult to crack and improve the data security to a large extent.

Further, in the file encryption method according to the present disclosure, the initial key may be an array. The result calculated by the pre-determined function may be an encryption key array that has the same length as the initial key array. Because an array has a larger data range than a single character, the valid range of the encryption key may be expanded to a large extent, thus making the encryption key more difficult to crack.

Further, in the file encryption method according to the present disclosure, the data for encryption may be sequentially retrieved in sections. Each time the data for encryption is retrieved, the length of the already encrypted data may be required to calculate the encryption key. That is, when the data for encryption is retrieved in sections of different lengths, different encryption keys may be calculated, thus making the encryption key more difficult to crack.

Further, the file encryption method according to the present disclosure may individually encrypt each byte of the data in the file, and may individually decrypt each byte of the data in the encrypted file such that the encrypted file may be decrypted at any point. Thus, the present disclosure may be suitable for encrypting streaming data by satisfying the user's need for dragging the playback when video and audio files are being played at the client side.

### The second embodiment

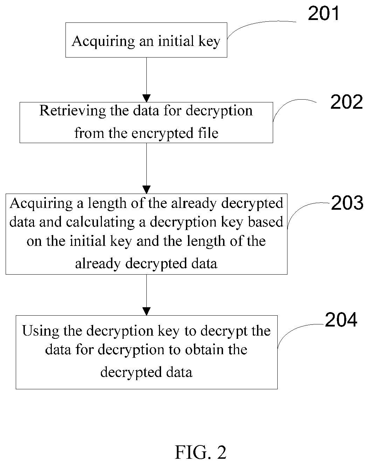

Referring to FIG. 2, the second embodiment of the present disclosure provides a decryption method for the encrypted file, including step 201 through step 204, as described in detail in the following.

Step 201: acquiring an initial key.

Specifically, the same initial key for encryption may be used in decryption. In this step, the initial key may be retrieved from the storage directory for the initial key saved during encryption, or may be obtained by other methods. The technical solution for obtaining the initial key is well known to those skilled in the art, and will not be repeated herein.

Step 202: retrieving the data for decryption from the encrypted file.

Because the retrieval method of the data for decryption affects the generation of the decryption key, in one embodiment, the retrieval method of the data for decryption may be the same as the retrieval method of the data for encryption during the file encryption process.

Step 203: acquiring a length of the already decrypted data and calculating a decryption key based on the initial key and the length of the already decrypted data.

The length of the already decrypted data in the file refers to the length of the data in the file that has already been decrypted at the moment.

When the decryption key is calculated, the initial key, the length of the initial key, and the length of the already decrypted data may be plugged into the pre-determined function to obtain the decryption key. The pre-determined function used in decryption may be the same as the pre-determined function used in encryption.

Step 204: using the decryption key to decrypt the data for decryption to obtain the decrypted data.

When the decryption key is used to decrypt the data in the file for decryption, the logic XOR operation may be performed between the decryption key and the corresponding byte of the encrypted data to obtain the corresponding byte of the decrypted data.

In the file decryption method according to the present disclosure, to smoothly decrypt the encrypted file, the decryption operation may correspond to the encryption operation by using the same initial key, same calculation rules, and same file retrieval method. The decryption key calculation may use the same programming logic as the encryption key calculation, which is described in the first embodiment, and will not be repeated herein.

Similarly, in the file decryption method according the present disclosure, the decryption operation may be performed on each byte of the data in the file, thus making it suitable for streaming data decryption.

### The third embodiment

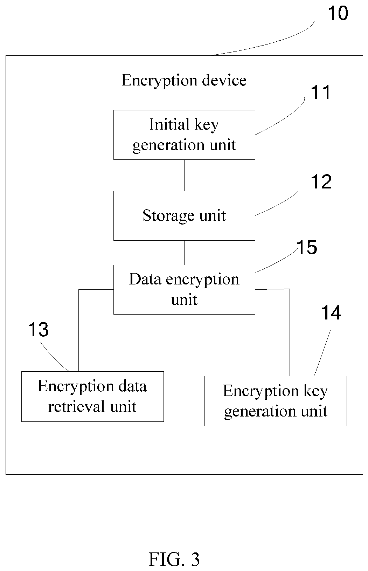

Referring to FIG. 3, the third embodiment of the present disclosure provides a file encryption device, which corresponds to the file encryption method as shown in FIG. 1, implements the file encryption method of the first embodiment in detail, and achieves the same effect. The file encryption device 10 may include an initial key generation unit 11, a storage unit 12, an encryption data retrieval unit 13, an encryption key generation unit 14, and a data encryption unit 15. The initial key generation unit 11 may be connected to the storage unit 12. The encryption key generation unit 14 may be connected to the data encryption unit 15. The data encryption unit 15 may be connected to the storage unit 12 and the encryption data retrieval unit 13.

Specifically, the initial key generation unit 11 may be used to generate the initial key and store the initial key into the storage unit 12.

In one embodiment, the initial key may be a single digit or an array of digits, random or foxed. In certain other embodiments, to increase the security, the initial key may be generated by a random function. Further, to make the key more difficult to crack, the initial key may be generated by a random function as an array including a plurality of elements.

The initial key may be stored. On one hand, the stored initial key may be used in the subsequent encryption process. On the other hand, the stored initial key may be used in the decryption process as well.

The encryption data retrieval unit 13 may be used to retrieve the data for encryption from the file, and to provide the data for encryption to the data encryption unit 15 for encryption operation.

In one embodiment, when being retrieved from the file, the data for encryption may be retrieved all at one time or sequentially in sections. The sequential retrieval in sections refers to sequentially retrieving the data for encryption in sections having a pre-determined fixed length such that a plurality of retrievals may be required when the sectional retrieval method is used to retrieve the data for encryption. Each time a section of the data is retrieved, the data section may be encrypted. Then the next section of the data is retrieved until all the data for encryption has been encrypted.

The encryption key generation unit 14 may acquire the length of the already encrypted data in the file, and may calculate the encryption key based on the initial key and the length of the already encrypted data. The encryption key generation unit 14 may obtain the initial key from the initial key generation unit 11 or retrieve the initial key from the storage unit 12, which is not limited by the present disclosure.

The length of the already encrypted data in the file refers to the length of the data in the file that has already been encrypted at the moment.

When the encryption key is calculated, the initial key, the length of the initial key, and the length of the already encrypted data may be plugged into the pre-determined function to obtain the encryption key. The type of the pre-determined function is not limited by the present disclosure. In certain embodiments, the pre-determined function may be a hash function. Because the result calculated by a hash function is not predictable, the encryption key calculated by the pre-determined function is divergent, and does not follow any fixed rules, thus making the encryption key more difficult to crack.

In certain other embodiments, to increase the cracking difficulty, the initial key may be configured to be a random array including a plurality of elements. The encryption key array calculated by the pre-determined function may have the same length as the initial key array. In this case, the longer the initial key array, the larger the data range. Accordingly, the resulting encryption key array may have an expanded data range. Each byte in the encryption key array may be used to encrypt each byte of the data in the file. The encryption keys may belong to a large data range, and may be divergent from each other. Each calculated encryption key array does not follow any fixed rules. Thus, to a large extent, it is more difficult to crack the encryption keys, and the data security may be increased accordingly.

The data encryption unit 15 may use the encryption key to encrypt the data for encryption to obtain the encrypted data, and store the encrypted data into the storage unit 12. The encryption key may be obtained from the encryption key generation unit 14. The data for encryption may be obtained from the encryption data retrieval unit 13.

When the encryption key is used to encrypt the data for encryption in the file, the logic XOR operation may be performed between the encryption key and the corresponding byte of the data for encryption to obtain the byte of the encrypted data.

In one embodiment, when the file is encrypted, the file may be retrieved sequentially in unit of bytes for the encryption operation. In other words, each byte of the data in the file may have a corresponding encryption key. The logic XOR operation may be performed between each byte of the data for encryption and the corresponding encryption key to obtain the byte of the encrypted data. Thus, in the file encryption process, the encryption operation may be performed on one byte at a time, which is retrieved sequentially from the file.

The calculation method for the encryption key and the implementation logic of the encryption method used in this embodiment may be the same as the first embodiment, and will not be repeated herein.

Further, when the file encryption device according to the present disclosure is used to encrypt a file, the initial key and the length of the already encrypted data may be used to calculate the encryption key, which may be used to encrypt the file. When being encrypted, each byte of the data in the file may have a corresponding encryption key. Thus, when the encrypted file is decrypted, the initial key, the calculation rules, and the retrieval method of the length of the already encrypted data at the moment may be required to obtain the correct decryption key.

Further, when the file encryption device according to the present disclosure encrypts a file, the initial key may be generated by a random function. The initial key, the length of the initial key, and the length of the already encrypted data may be plugged into a hash function to calculate the encryption key. The resulting encryption key may not follow any fixed rules. The data encrypted by the encryption key may not follow any fixed rules either. Compared to the existing encryption methods, the present disclosure may substantially increase the key cracking difficulty and improve the data security.

Further, when the file encryption device according to the present disclosure encrypts a file, the initial key may be an array. The encryption key array calculated by the pre-determined function may have the same length as the initial key. Because the array has a larger data range than a single character, the encryption key may have a substantially expanded data range, thus further increasing the key cracking difficulty.

Further, when the file encryption device according to the present disclosure encrypts a file, the data for encryption may be retrieved sequentially in sections. Each time a section of the data for encryption is retrieved, the length of the already encrypted data may be used to calculate the encryption key. When the data for encryption is retrieved in sections of different lengths, different encryption keys may be calculated, thus further increasing the key cracking difficulty.

Further, the file encryption method according to the present disclosure may individually encrypt each byte of the data in the file, and may individually decrypt each byte of the data in the encrypted file such that the encrypted file may be decrypted at any point. Thus, the present disclosure may be suitable for encrypting streaming data by satisfying the user's need for dragging the playback when video and audio files are being played at the client side.

### The fourth embodiment

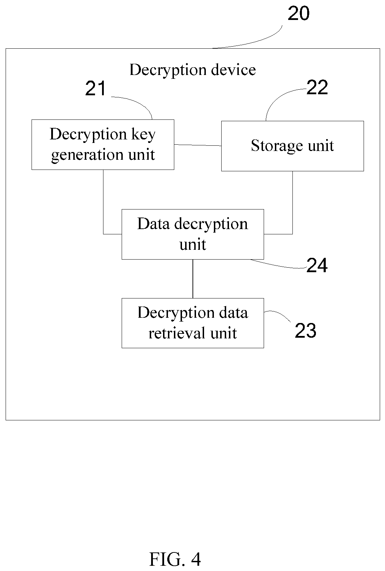

Referring to FIG. 4, the fourth embodiment of the present disclosure provides a file decryption device, which corresponds to the file decryption method as shown in FIG. 2, implements the file decryption method of the second embodiment in detail, and achieves the same effect. The file decryption device 20 may include a decryption key generation unit 21, a storage unit 22, a decryption data retrieval unit 23, and a data decryption unit 24. The decryption key generation unit 21 may be connected to the storage unit 22 and the data decryption unit 24. The data decryption unit 24 may be connected to the three other units.

Specifically, the decryption key generation unit 21 may obtain the initial key used in the file encryption from the storage unit 22 and the length of the already decrypted data in the file to calculate the decryption key based on the initial key and the length of the already decrypted data.

In one embodiment, the initial key may be retrieved from the storage directory that stores the initial key for encryption. In other embodiments, the initial key may be obtained through other methods, which are known to those skilled in the art, and will not be repeated herein. The length of the already decrypted data in the file refers to the length of the data in the file that has already been decrypted at the moment.

When the decryption key is calculated, the initial key, the length of the initial key, and the length of the already decrypted data may be plugged into a pre-determined function to obtain the decryption key. The pre-determined function for decryption key may be the same as the pre-determined function for encryption key.

The decryption data retrieval unit 23 may retrieve the data for decryption in the file. As previously described, the method for retrieving the data for decryption may affect the generation of the decryption key. In one embodiment, the retrieval method for the data for decryption may be the same as the retrieval method for the data for encryption.

The data decryption unit 24 may use the decryption key to decrypt the data for decryption to obtain the decrypted data.

When the decryption key is used to decrypt the data for decryption in the file, the logic XOR operation may be performed between the decryption key and the corresponding byte of the data for decryption to obtain the byte of the decrypted data.

In the encrypted file decryption device according to the present disclosure, to smoothly decrypt the encrypted file, the decryption operation may correspond to the encryption operation by using the same initial key, same calculation rules, and same file retrieval method. The decryption key calculation may use the same programming logic as the encryption key calculation, which will not be repeated herein.

Similarly, in the encrypted file decryption device according the present disclosure, the decryption operation may be performed on each byte of the data in the file, thus making it suitable for streaming data decryption.

The sequence of the embodiments is for illustration purpose only, and does not represent any preferences.

The disclosed exemplary devices are for illustration only. The individual units described as discrete components may or may not be physically separated. The components shown as separate units may or may not be physical units. That is, the units may be located in one position, or may be distributed in a plurality of network units. Based on the actual requirements, some or all of the units or modules may be selected to implement the technical solution of the present disclosure. Those skilled in the art may understand and practice the disclosed devices without departing from the scope of the present disclosure.

Through the description of the above embodiments, it is obvious to those skilled in the art that the embodiments may be implemented by a combination of software and generic hardware platform, or simply by hardware. Based on this understanding, the essential portion of the above described technical solutions or the portion exceeding the prior art may be embodied in the form of software product. The computer software product, stored in a computer readable storage medium, such as ROM/RAM, magnetic disk drive, optical drive, etc., may include a plurality of instructions to instruct a computer (e.g., personal computer, server, or network equipment) to execute the methods of the embodiments or portions of the embodiments.

The foregoing is intended only as certain embodiments of the present disclosure, and is not intended to limit the scope of the present disclosure. Any modifications, equivalent substitutions, and improvements, etc. within the spirit and principles of the present disclosure are intended to be encompassed by the scope of the present disclosure.

## Claims

1. A file encryption method, comprising:
generating an initial key;
retrieving data for encryption in a file;
obtaining a length of already encrypted data, and calculating an encryption key based on the initial key and the length of the already encrypted data; and
using the encryption key to encrypt the data for encryption to obtain encrypted data.

2. The file encryption method according to claim 1, wherein:
the encryption key is calculated by plugging the initial key, the length of the initial key, and the length of the already encrypted data into a pre-determined function.

3. The file encryption method according to claim 2, wherein:
the encryption key calculated by the pre-determined function is divergent.

4. The file encryption method according to claim 2, wherein:
the pre-determined function is a hash function.

5. The file encryption method according to claim 2, wherein:
the encryption key has a same length as the initial key.

6. The file encryption method according to claim 1, wherein a step for generating the initial key includes:
generating the initial key through a random function.

7. The file encryption method according to claim 1, wherein:
the initial key is an array.

8. The file encryption method according to claim 1, wherein:
when the encryption key is used to encrypt the data for encryption, each byte of the data for encryption is encrypted individually.

9. The file encryption method according to claim 1, wherein:
the encrypted data is obtained by performing a logic XOR operation between the encryption key and the data for encryption.

10. The file encryption method according to claim 1, wherein:
the file is a streaming media file.

11. The file encryption method according to claim 1, wherein:
when being retrieved, the data for encryption in the file is retrieved sequentially in sections.

12. The file encryption method according to claim 1, further including:
storing the initial key.

13. An encrypted file decryption method, comprising:
acquiring an initial key;
retrieving data for decryption from an encrypted file;
obtaining a length of already decrypted data and calculating a decryption key based on the initial key and the length of the already decrypted data; and
using the decryption key to decrypt the data for decryption to obtain decrypted data.

14. The encrypted file decryption method according to claim 13, wherein:
the decryption key is calculated by plugging the initial key, the length of the initial key, and the length of the already decrypted data into a pre-determined function.

15. The encrypted file decryption method according to claim 14, wherein:
the pre-determined function for decryption is the same as the pre-determined function for encryption.

16. The encrypted file decryption method according to claim 13, wherein:
the initial key for decryption is the same as the initial key for encryption.

17. The encrypted file decryption method according to claim 13, wherein:
when the decryption key is used to decrypt the data for decryption, each byte of the data for decryption is decrypted individually.

18. The encrypted file decryption method according to claim 13, wherein:
the decrypted data is obtained by performing a logic XOR operation between the decryption key and the data for decryption.

19. The encrypted file decryption method according to claim 13, wherein:
the encrypted file is a streaming media file.

20. The encrypted file decryption method according to claim 13, wherein:
a method for retrieving the data for decryption is the same as the method for retrieving the data for encryption when the file is encrypted.

21. A file encryption device, comprising:
an initial key generation unit configured to generate an initial key and store the initial key into a storage unit;
an encryption data retrieval unit configured to retrieve data for encryption in a file;
an encryption key generation unit configured to obtain a length of already encrypted data in the file and calculate an encryption key based on the initial key and the length of the already encrypted data; and
a data encryption unit configured to use the encryption key to encrypt the data for encryption to obtain encrypted data and store the encrypted data into the storage unit.

22. The file encryption device according to claim 21, wherein:
the encryption key is calculated by plugging the initial key, the length of the initial key, and the length of the already encrypted data into a pre-determined function.

23. The file encryption device according to claim 22, wherein:
the encryption key calculated by the pre-determined function is divergent.

24. The file encryption device according to claim 22, wherein:
the pre-determined function is a hash function.

25. The file encryption device according to claim 22, wherein:
the encryption key has a same length as the initial key.

26. The file encryption device according to claim 21, wherein:
the initial key generation unit uses a random function to generate the initial key.

27. The file encryption device according to claim 21, wherein:
when the data encryption unit uses the encryption key to encrypt the data for encryption, each byte of the data for encryption is encrypted individually.

28. The file encryption device according to claim 21, wherein:
the data encryption unit obtains the encrypted data by performing a logic XOR operation between the encryption key and the data for encryption.

29. The file encryption device according to claim 21, wherein:
the file is a streaming media file.

30. The file encryption device according to claim 21, wherein:
when the encryption data retrieval unit retrieves the data for encryption, the data for encryption in the file is retrieved sequentially in sections.

31. An encrypted file decryption device, comprising:
a decryption key generation unit configured to obtain an initial key from a storage unit, obtain a length of already decrypted data in a file, and calculate a decryption key base on the initial key and the length of the already decrypted data;
a decryption data retrieval unit configured to retrieve data for decryption from an encrypted file; and
a data decryption unit configured to use the decryption key to decrypt the data for decryption to obtain decrypted data and store the decrypted data into the storage unit.

32. The encrypted file decryption device according to claim 31, wherein:
the decryption key generation unit calculates the decryption key by plugging the initial key, the length of the initial key, and the length of the already decrypted data into a pre-determined function.

33. The encrypted file decryption device according to claim 32, wherein:
the pre-determined function for decryption is the same as the pre-determined function for encryption.

34. The encrypted file decryption device according to claim 31, wherein:
the initial key for decryption is the same as the initial key for encryption.

35. The encrypted file decryption device according to claim 31, wherein:
when the data decryption unit uses the decryption key to decrypt the data for decryption, each byte of the data for decryption is decrypted individually.

36. The encrypted file decryption device according to claim 31, wherein:
the data decryption unit obtains the decrypted data by performing a logic XOR operation between the decryption key and the data for decryption.

37. The encrypted file decryption device according to claim 31, wherein:
the encrypted file is a streaming media file.

38. The encrypted file decryption device according to claim 31, wherein:
a method for retrieving the data for decryption is the same as the method for retrieving the data for encryption when the file is encrypted.
